# EUROPÄISCHE PATENTSCHRIFT

(11) **EP 2 649 342 B1**
(45) Veröffentlichungstag und Bekanntmachung des Hinweises auf die Patenterteilung: **10.08.2016**
(21) Anmeldenummer: 11788848.7
(22) Anmeldetag: 30.11.2011
(51) Int. Cl.: F16D 55/227, F16D 65/097, F16D 66/00, F16D 66/02

(54) **TEILBELAGSCHEIBENBREMSE MIT REIBBELAGVERSCHLEIßWARNVORRICHTUNG**
PARTIALLY LINED DISC BRAKE HAVING FRICTION LINING WEAR WARNING DEVICE
FREIN À DISQUE À GARNITURES PARTIELLES POURVU D'UN DISPOSITIF D'AVERTISSEMENT D'USURE DES GARNITURES DE FREIN

(30) Priorität: 09.12.2010 DE 102010062766; 25.11.2011 DE 102011087140
(43) Veröffentlichungstag der Anmeldung: 16.10.2013
(73) Patentinhaber: Continental Teves AG & Co. OHG, 60488 Frankfurt (DE)
(72) Erfinder: TORIYAMA, Noriyuki, Kuwana Mie 511-0865 (JP); TANNO, Keita, Tokyo 194-0045 (JP)
(86) Internationale Anmeldenummer: PCT/EP2011/071424
(87) Internationale Veröffentlichungsnummer: WO 2012/076385

(56) Entgegenhaltungen:
- US-A- 5 687 817
- US-A- 5 934 417
- US-A- 5 954 163
- US-A1- 2010 243 385

## Beschreibung

Gattungsgemäße Teilbelagscheibenbremsen vom Schwimmsatteltyp umfassen Reibbeläge, die in einem Halter aufgenommen sind, einen Bremssattel der verschiebbar am Halter gelagert ist, sowie eine Befederung. Die Reibbeläge sind beidseits einer Bremsscheibe platziert, die um eine Rotationsachse drehbar vorgesehen ist. Der Bremssattel übergreift die Bremsscheibe und umfasst ein Gehäuse mit einer Betätigungsvorrichtung (Kolben, Aktuator oder ähnliches), die eine Zustellbewegung der Reibbeläge bewirkt. Federelemente bewirken eine elastische Vorspannung zwischen Reibbelägen und Halter und/oder zwischen Bremssattel und Halter.

Eine grundsätzliche Problematik von Scheibenbremsen besteht darin, dass die verschiebbare Anordnung zwischen Halter und Bremssattel prinzipiell eine präzise Linearführung erfordert, um Klappergeräusche auf Schlechtwegstrecken zu vermeiden. Andererseits erfordern Bewitterung, Verschmutzung und Korrosion eine besonders dauerfeste Konstruktion. Ein Reibbelagwechsel soll einfach, schnell und fehlerfrei durchführbar sein. Um alle diese Aufgaben bei vertretbaren Kosten zu erfüllen, sind bei den bekannten Großserienmodellen zwei parallel zueinander angeordnete Zylinderstifte vorgesehen, die verschiebbar in einer elastischen Buchse angeordnet sind. Die Buchsen sind meist in einer Bohrung vom Halter aufgenommen. Zwischen Halter und Reibbelägen ist oft ein Gleitblech eingefügt, welches eine Federfunktion übernimmt.

Die Gestaltung und Montage bekannter Teilbelagscheibenbremsen mit Federanordnung und Reibbelägen ist aufwändig, weil zwischen einlaufseitig und auslaufseitig angeordneten Zylinderstiften zu unterscheiden ist, rechtsseitig oder linksseitig platzierte Einheiten verschieden sind, und dadurch die Teilevielfalt und die Logistik insgesamt erschwert ist. Auch das Komfort- und Schwingungsverhalten (NVH-Kriterien) ist meist verbesserungsfähig.

Die US 5,934,417 beschreibt einen asymmetrisch ausgebildeten Faustsattel mit Reibbelägen wobei Laschen einer Reibbelagverschleißwarnvorrichtung von den Federschenkeln einer Rückzugfeder beaufschlagt sind, und wobei diese Laschen keine einheitliche Breite aufweisen. Auch soll für eine Befestigung der Reibbelagverschleißwarnvorrichtung an einer Rückenplatte irgendeine Verstemmung vorgesehen sein, deren Einzelheiten unklar sind.Der vorliegenden Erfindung liegt die Aufgabe zu Grunde, eine verbesserte Konstruktion mit Mehrwertfunktion vorzuschlagen, die mit geringem Aufwand in Großserie eingeführt werden kann, und wobei maßgebliche Vorteile der Erfindung - beispielsweise durch einfachen Reibbelagwechsel - auch nachträglich in einem gegebenen Kraftfahrzeugbestand nachgerüstet werden können.

Die Aufgabe wird erfindungsgemäß für die verschiedenen Produktgattungen, die in einem Kraftfahrzeug als Radbremssystem funktional gemeinsam vorliegen, durch die Merkmale vom unabhängigen Patentanspruch 1 gelöst. Die erfindungsgemäße Teilbelagscheibenbremse ist generell konstruktiv symmetrisch ausgebildet, was die Teilevielfalt reduziert. Insbesondere kommt ein identisch ausgebildetes Führungssystem mit identischen Zylinderstiften zum Einsatz. Identisch ausgebildete Reibbeläge sind mit einer integrierten Reibbelagverschleißwarnvorrichtung vorgesehen, welche gleichzeitig eine Befederungsfunktion übernimmt. Weitere Einzelheiten der Erfindung gehen aus der Beschreibung anhand der Zeichnung zusammen mit den Patentansprüchen hervor.

Die Zeichnungen zeigen jeweils in Gesamtheit, als Baugruppe oder Einzelteil, eine Teilbelagscheibenbremse 1, sowie deren Komponenten nämlich Befederung, Gehäuseführung, Reibbelag(satz) 5 in verschiedenen Ansichten oder Schnittdarstellungen in unterschiedlichen Maßstäben.

Regelmäßig werden Zuspannkräfte, die normal zur Reibfläche gerichtet sind, von einem Gehäuse 2 (Sattel, Faustsattel) erzeugt. Ein Faustsattel kann prinzipiell parallel zu den Zuspannkräften verschiebbar an einem Halter 3 angeordnet sein. Das Gehäuse 3 kann einen Aktuator 4 aufweisen, der hydraulisch und/oder elektromechanisch antreibbar ist, und insbesondere eine elektromechanische Feststellbremsfunktion (EPB) aufweist.

Die Reibbeläge 5 umfassen jeweils Reibbelag 17 und Rückenplatte 16. Rechter und linker Reibbelag 5 sind jeweils einheitlich achssymmetrisch ausgeführt. Die Rückenplatte 16 von jedem Reibbelag 5 verfügt einlaufseitig und auslaufseitig über jeweils einen Vorsprung oder Nocken 18 zur definierten Abstützung und Führung in einer Nut vom Halter 3. Umfangskräfte werden über den jeweiligen Vorsprung (bezogen auf die involvierte Passage der Rückenplatte 16) gewissermaßen gedrückt, oder bei hammerkopfartiger Aufhängung im Halter 3 gezogen - in den Halter 3 eingeleitet. Mischformen der Abstützung (z.B. gedrückt und gezogen) sind auch möglich.

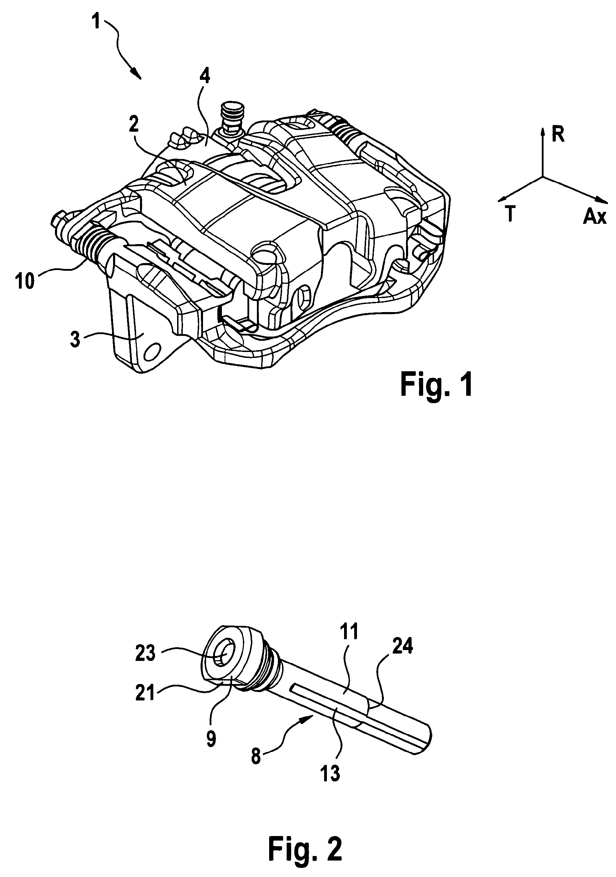

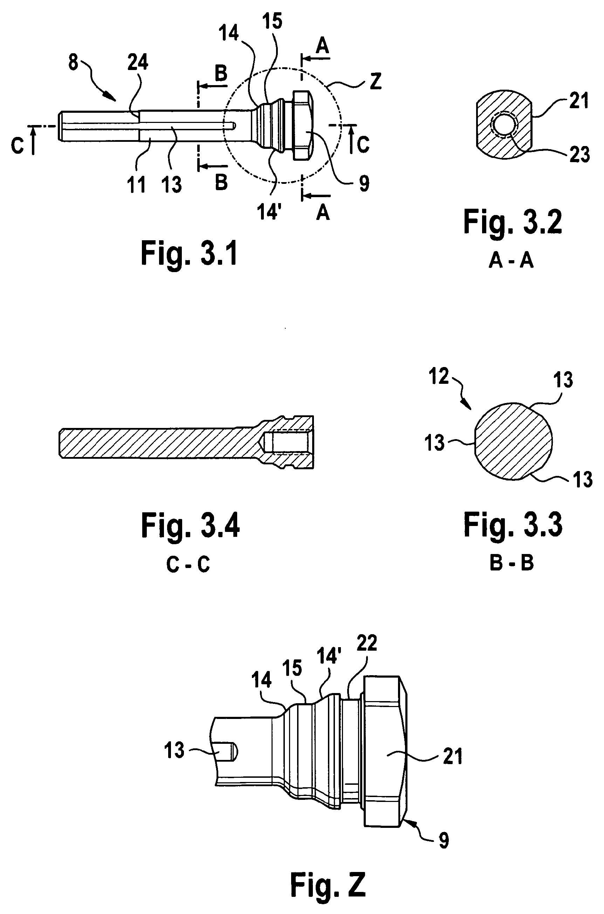

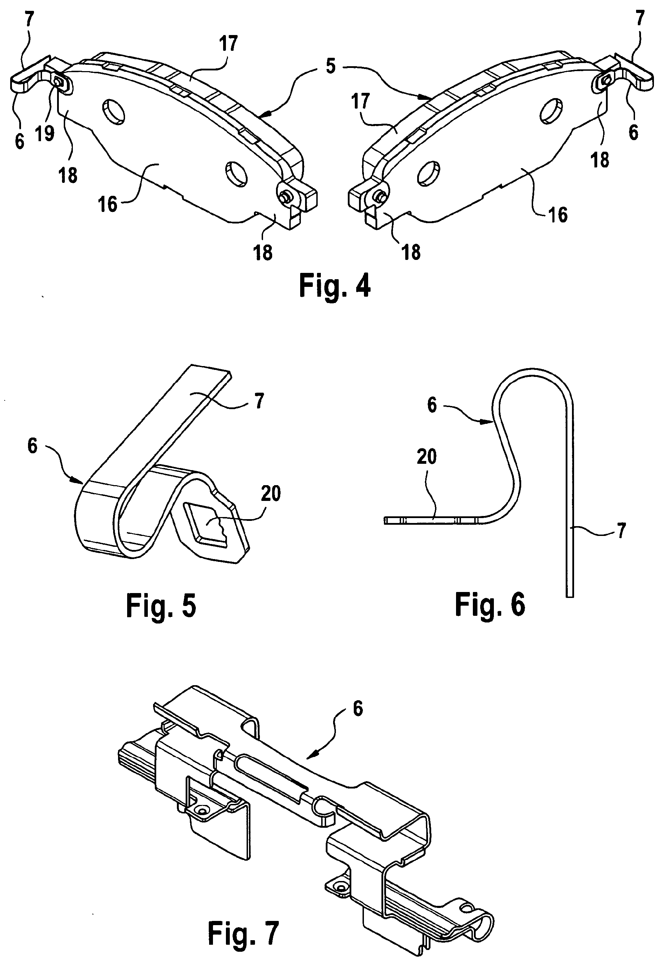

Desweiteren ist eine Befederung in Axialrichtung Ax, Radialrichtung R und Tangentialrichtung T sinnvoll, um Klappergeräuschen vorzubeugen. Zusätzlich ist eine Federwirkung zur Restbremsmomentenvermeidung implementierbar. Die verschiedenen Federfunktionen werden vorzugsweise von einer Federbaugruppe übernommen, die einteilig gefertigt sein kann, und entweder am Reibbelag 5 befestigt ist, oder an dem Halter 3 angeordnet ist (Fig 7).

Bei einer Ausführungsform ist am Nocken 18 jeder Rückenplatte 16 zu diesem Zweck ein Federelement 6 befestigt, insbesondere angenietet. Das Federelement 6 ermöglicht in Tangentialrichtung eine elastische Vorspannung zwischen Halter 3 und Nocken 18, so dass Klackgeräusche bei Drehrichtungswechsel vermieden werden. Eine Öffnung zum Durchgang vom Niet 19 ist prinzipiell rechteckig sowie asymetrisch mit wenigstens einseitiger Profilierung (Wellenform) ausgebildet.

Das Federelement 6 kann weiterhin zusätzlich in Radialrichtung R wirksam sein, und eine entsprechende Flanke, Federmittel oder ähnliches zur Anlage an Gehäuse 2 oder Halter 3 aufweisen.

Das Federelement 6 ist multifunktional ausgebildet, indem eine Reibbelagverschleißwarnvorrichtung 7 integriert ist, weil ein Federschenkel mit einer definierten Länge derart in Richtung Bremsscheibe vorsteht, und bei verschlissenem Reibbelag 17 dadurch derart an der Bremsscheibe schleift, dass eine akustische Geräuschanregung erfolgt.

Weiterhin wird ein Federelement 6 vorgeschlagen, das es ermöglicht, unerwünschte Restbremsmomente zu reduzieren. Zu diesem Zweck übt das Federelement 6 permanent eine, entgegen der Betätigungsrichtung gerichtete, Rückstellkraft auf den Reibbelag 5 aus. Die Rückstellwirkung ist über die Produktlebensdauer konstant.

Die Führung zwischen Gehäuse 2 und Halter 3 kann durch zumindest abschnittsweise unrund profilierte, im Durchmesser mehrfach abgestuft ausgebildete Bolzen 8 realisiert sein, von denen einer einlaufseitig und einer auslaufseitig an dem Gehäuse 2 befestigt ist. Die Führung umfasst einen Abschnitt 11 mit Profilierung 12 die ausgehend von einer Zylinderform drei Planflächen 13 aufweist, die am Umfang regelmäßig verteilt im Winkel zueinander angeordnet sind. Die Planflächen 13 sind einheitlich im Hauptverschiebungsbereich der Führung angeordnet. Durch die Planflächen 13 ist ein Aufnahmeraum vorgesehen, der mit Schmiermittel oder Luft gefüllt sein kann. Mittel zum Druckausgleich der Bolzenführung können vorgesehen sein, so dass jeder Bolzen 8 einfach in die Führung vom Halter 3 eingefügt werden kann. Demzufolge sind die Bolzen 8 parallel zueinander platziert und in der Führung verschiebbar angeordnet. Alle Bolzen 8 sind mit Vorteil identisch gleich ausgeführt, so dass für die Montage sämtlicher Bolzen 8 ein logistisch vereinfachter Prozess ausreicht. Mit anderen Worten muss durch vereinheitlichte Konstruktion der Bolzen 8 bei deren Montage an Gehäuse/Halter 2/3 nicht zwischen rechter oder linker Bauart der Teilbelagscheibenbremse 1 unterschieden werden. Jeder Bolzen 8 ist in einer Aufnahmebohrung vom Halter 3 - parallel zur Achse der Bremsscheibe - axial verschiebbar geführt angeordnet. Die Bolzen 8 sind in der zugeordneten Aufnahmebohrung unmittelbar direkt aufgenommen. Zur Abdichtung ist ein elastischer Faltenbalg 10 vorgesehen, welcher zur Abdichtung zwischen einem Sockel 9 vom Bolzen 8 und dem Halter 3 eingespannt ist. Im Übrigen weist der Sockel 9 neben einer Aufnahme für den Faltenbalg 10 eine vorzugsweise mehrfach gestuft ausgeführte Konifizierung 14 zur An- und Auflage am Halter 3 sowie eine Schlüsselfläche 21 auf, die es ermöglicht, ein Werkzeug anzusetzen, um ein Befestigungsmittel in eine Gewindebohrung 23 einzudrehen, so dass der Bolzen 8 am Gehäuse 2 fixiert ist. Eine Stufe 24 ermöglicht einen Durchmessersprung von 3 % oder mehr, wobei ein Abschnitt mit einem vergrößerten Durchmesser etwa 50% oder mehr der Gesamtlänge von dem Bolzen 8 aufweist.

### Bezugszeichenliste

- 1: Teilbelagscheibenbremse
- 2: Gehäuse
- 3: Halter
- 4: Aktuator
- 5: Reibbelag
- 6: Federelement
- 7: Reibbelagverschleißwarnvorrichtung
- 8: Bolzen
- 9: Sockel
- 10: Faltenbalg
- 11: Abschnitt
- 12: Profilierung
- 13: Planfläche
- 14: Konifizierung
- 15: Zentrierabsatz
- 16: Rückenplatte
- 17: Reibbelag
- 18: Nocken
- 19: Niet
- 20: Öffnung
- 21: Schlüsselfläche
- 22: Aufnahme
- 23: Gewindebohrung
- 24: Stufe

- Ax: Axialrichtung
- R: Radialrichtung
- T: Tangentialrichtung

## Patentansprüche

1. Teilbelagscheibenbremse (1), umfassend ein Gehäuse (2) mit wenigstens einem Aktuator (4) zur Erzeugung einer Zuspannkraft, und mit einem Halter (3) mit darin in Richtung auf eine Bremsscheibe verschiebbar aufgenommenen Reibbelägen (5), und wobei tangential gerichtete Umfangskräfte der Reibbeläge (5) in dem Halter (3) aufgenommen sind, wobei das Gehäuse (2) axial verschiebbar am Halter (3) geführt angeordnet ist, sowie mit wenigstens einem Federelement (6) zur Befederung zwischen Reibbelag (5), Gehäuse (2) und/oder Halter (3) in einer Axial-, Radial-, und/oder Tangentialrichtung, **dadurch gekennzeichnet, dass** jede Teilbelagscheibenbremse (1), ohne Unterscheidung zwischen einer rechtsseitig montierbaren Bauform oder einer linksseitig montierbaren Bauform, jeweils bezogen auf deren Befestigungposition an einer Fahrzeugachse, achssymmetrisch gleich ausgebildet sind, dass eine Reibbelagverschleißwarnvorrichtung (7) als U-förmig gebogenes Flachblech mit zwei im wesentlichen parallel zueinander angeordneten Abschnitten und mit einer im Wesentlichen rechtwinklig von dem Abschnitt abgekröpften Befestigungslasche ausgebildet ist, die Reibbelagverschleißwarnvorrichtung (7) aus flachem, streifenförmigen Blechwerkstoff mit durchgehend gleicher Dicke und mit durchgehend gleicher Breite vorgesehen ist, die Befestigungslasche mit mindestens einem Befestigungselement an einem Nocken einer Rückenplatte (16) von dem Reibbelag (5) angeordnet ist, die Befestigungslasche eine Durchgangsöffnung mit einem asymmetrisch profilierten Rand aufweist, und wobei der Rand wellenförmig ausgebildet ist.

2. Teilbelagscheibenbremse (1) nach Anspruch 1, **dadurch gekennzeichnet, dass** jeweils Gehäuse (2), Halter (3), und Reibbelag (5) achssymmetrisch ausgebildet ist.

3. Teilbelagscheibenbremse (1) nach Anspruch 1, **dadurch gekennzeichnet, dass** das Federelement (6) zusätzlich als integrierte Reibbelagverschleißwarnvörrichtung (7) ausgebildet ist.

4. Teilbelagscheibenbremse (1) nach Anspruch 1, **dadurch gekennzeichnet, dass** die Reibbelagverschleißwarnvorrichtung (7) als freier Federschenkel ausgebildet ist, der mit wenigstens einem Teil im Wesentlichen parallel zu einer Raddrehachse in einem Spalt zwischen einer Abstützfläche an dem Halter (3) und einem Nocken (18) von dem Reibbelag (5) angeordnet ist.

5. Reibbelag (5), für eine Teilbelagscheibenbremse (1), nach einem oder mehreren der vorhergehenden Ansprüche, **dadurch gekennzeichnet, dass** jeweils ein einlaufseitiges Ende vom Reibbelag (5) sowie ein auslaufseitiges Ende vom Reibbelag (5) mit einer gesondert an der Rückenplatte (16) befestigten Reibbelagverschleisswarnvorrichtung (7) versehen ist.

## Claims

1. Partially lined disk brake (1), comprising a housing (2) with at least one actuator (4) for producing an application force, and with a holder (3) with friction pads (5) accommodated therein in a manner which allows movement in the direction of a brake disk, and wherein tangentially oriented circumferential forces of the friction pads (5) are absorbed in the holder (3), wherein the housing (2) is arranged on the holder (3) in a manner which allows axial guided movement, and has at least one spring element (6) to provide springing between the friction pad (5), the housing (2) and/or the holder (3) in an axial, radial and/or tangential direction, **characterized in that** each partially lined disk brake (1) is of identical axially symmetrical design with respect to the fastening position thereof on a vehicle axle, without differentiation between a form that can be mounted on the right-hand side or a form that can be mounted on the left-hand side, **in that** a friction lining wear warning device (7) is designed as a flat plate bent into a U shape and having two sections arranged substantially parallel to one another and having a fastening lug offset substantially at right angles from said section, the friction lining wear warning device (7) provided is made of flat sheet metal material in the form of a strip of constant thickness throughout and of constant width throughout, the fastening lug is arranged by means of at least one fastening element on a dog of a backplate (16) of the friction pads (5), the fastening lug has a through opening with an asymmetrically profiled rim, and wherein the rim is of corrugated design.

2. Partially lined disk brake (1) according to Claim 1, **characterized in that** the housing (2), the holder (3) and the friction pad (5) are each of axially symmetrical design.

3. Partially lined disk brake (1) according to Claim 1, **characterized in that** the spring element (6) is additionally designed as an integrated friction lining wear warning device (7).

4. Partially lined disk brake (1) according to Claim 1, **characterized in that** the friction lining wear warning device (7) is designed as a free spring limb, at least one part of which is arranged substantially parallel to a wheel rotational axis, in a gap between a supporting surface on the holder (3) and a dog (18) of the friction pad (5).

5. Friction pad (5) for a partially lined disk brake (1) according to one or more of the preceding claims, **characterized in that** a leading end of the friction pad (5) and a trailing end of the friction pad (5) are each provided with a friction lining wear warning device (7) fastened separately to the backplate (16).

## Revendications

1. Frein à disque à garnitures partielles (1), comprenant un boîtier (2) avec au moins un actionneur (4) pour générer une force de serrage, et un support (3) avec des garnitures de friction (5) reçues de manière déplaçable dans celui-ci dans la direction d'un disque de frein, et dans lequel des forces périphériques orientées tangentiellement des garnitures de friction (5) sont reçues dans le support (3), le boîtier (2) étant disposé de manière déplaçable axialement et guidé sur le support (3), et avec au moins un élément de ressort (6) pour réaliser une suspension entre la garniture de friction (5), le boîtier (2) et/ou le support (3) dans une direction axiale, radiale et/ou tangentielle, **caractérisé en ce que** chaque frein à disque à garnitures partielles (1) sans distinction entre une construction pouvant être montée du côté droit ou une construction pouvant être montée du côté gauche, à chaque fois par rapport à sa position de fixation sur un essieu du véhicule, est réalisé de manière identique et symétrique par rapport à l'axe, **en ce qu'**un dispositif d'avertissement d'usure de garniture de friction (7) est réalisé en tant que tôle plate cintrée en forme de U avec deux portions disposées essentiellement parallèlement l'une à l'autre et avec une patte de fixation coudée essentiellement à angle droit depuis la portion, le dispositif d'avertissement d'usure de garniture de friction (7) est réalisé à partir d'un matériau en tôle plate en forme de bande avec une épaisseur constamment identique et avec une largeur constamment égale, la patte de fixation est disposée avec au moins un élément de fixation au niveau d'une came d'une plaque arrière (16) de la garniture de friction (5), la patte de fixation présente une ouverture de passage avec un bord profilé de manière asymétrique et le bord est réalisé sous forme ondulée.

2. Frein à disque à garnitures partielles (1) selon la revendication 1, **caractérisé en ce que** dans chaque cas, le boîtier (2), le support (3) et la garniture de friction (5) sont réalisés avec une symétrie axiale.

3. Frein à disque à garnitures partielles (1) selon la revendication 1, **caractérisé en ce que** l'élément de ressort (6) est en outre réalisé sous forme de dispositif d'avertissement d'usure de garniture de friction intégré (7).

4. Frein à disque à garnitures partielles (1) selon la revendication 1, **caractérisé en ce que** le dispositif d'avertissement d'usure de garniture de friction (7) est réalisé sous forme de branche de ressort libre qui est disposée avec au moins une partie essentiellement parallèle à un axe de rotation de roue dans une fente entre une surface de support sur le support (3) et une came (18) de la garniture de friction (5).

5. Garnitures de friction (5) pour un frein à disque à garnitures partielles (1) selon l'une quelconque ou plusieurs des revendications précédentes, **caractérisée en ce que** dans chaque cas, une extrémité du côté de l'entrée de la garniture de friction (5) ainsi qu'une extrémité du côté de la sortie de la garniture de friction (5) sont pourvues d'un dispositif d'avertissement d'usure de garniture de friction (7) fixé séparément sur la plaque arrière (16).
